# FASCICULE DE BREVET EUROPEEN

(11) **EP 1 786 650 B1**
(45) Date de publication et mention de la délivrance du brevet: **01.05.2013**
(21) Numéro de dépôt: 05790814.7
(22) Date de dépôt: 20.07.2005
(51) Int. Cl.: B60N 2/30

(54) **SIEGE ESCAMOTABLE**
UMKLAPPBARER SITZ
STOWABLE SEAT

(30) Priorité: 06.09.2004 FR 0409406
(43) Date de publication de la demande: 23.05.2007
(73) Titulaire: GRUPO ANTOLIN-INGENIERIA, S.A., 09080 Burgos (ES); Peugeot Citroën Automobiles, 78140 Velizy-Villacoublay (FR)
(72) Inventeur: DUCHATEAU, Jean, F-43330 Pont Salomon (FR); FAYE, Patrick, F-42210 Montrond les Bains (FR); AUMOND, Jean Claude, F-42600 Montbrison (FR); KLIMINOWSKI, Pascal, F-25260 Montenois (FR)
(86) Numéro de dépôt international: PCT/FR2005/001863
(87) Numéro de publication internationale: WO 2006/027441

(56) Documents cités:
- WO-A-2004/043730
- DE-A1- 10 239 112
- FR-A- 2 826 321
- FR-A- 2 829 441
- US-A1- 2004 061 371

## Description

La présente invention concerne un siège escamotable de véhicule automobile pouvant occuper une position déployée permettant à un passager de s'y asseoir et une position repliée dans laquelle le siège s'escamote dans le plancher du véhicule, voir par exemple le document US 2004/0061371 A1, correspondant au préambule de la revendication indépendante 1

(Préliminairement, il est précisé que les termes haut, bas, avant, arrière, longitudinal, transversal, horizontal, vertical sont donnés par rapport à un référentiel véhicule.)

Certains véhicules, notamment de types monospace ou break, présentent des sièges de rang 1 situés en regard des portes à l'avant du véhicule, des sièges de rang 2 situés en regard des portes arrières du véhicule et des sièges de rang 3 qui se trouvent en arrière des sièges de rang 2 ; ces sièges se trouvent donc dans le compartiment de l'habitacle constituant habituellement le coffre. Les sièges de rang 3 peuvent être amovibles ou escamotables.

Dans ce dernier cas, une cuvette est prévue dans le plancher du coffre du véhicule dans laquelle le siège peut se replier, lorsqu'il n'est pas utilisé. Le siège se replie de manière à être entièrement contenu dans la cuvette, de telle sorte que le coffre présente un plancher sensiblement plan et peut être utilisé pour le transport d'objets.

Des exemples de sièges de ce type peuvent être trouvés dans les documents FR-A-2 826 321 ou FR-A-2 829 441.

Un problème récurrent des sièges escamotables de rang 3 réside dans le fait que, pour s'escamoter dans une cuvette dont la cote longitudinale (par rapport au référentiel du véhicule) est limitée, ces sièges présentent un dossier relativement court. En d'autres termes, pour pouvoir s'escamoter dans une cuvette ayant une cote longitudinale donnée et limitée, le siège doit lui-même présenter un dossier dont la dimension lui permet de rentrer dans la cuvette. Cela conduit à équiper un véhicule avec des sièges de rang 3 dont le dossier présente une dimension insuffisante pour assurer un confort satisfaisant à un passager s'y trouvant et pour assurer une retenue sécurisée d'un passager en cas d'accident.

Un but de l'invention est de proposer un siège qui, tout en pouvant s'escamoter dans un espace de petite dimension, présente un dossier assurant confort et sécurité à un occupant.

L'invention a pour objet un siège pour véhicule automobile comprenant les caractéristiques techniques de la revendication indépendante 1. Ainsi, l'idée à la base de l'invention est de réaliser un déport du dossier vers le haut lorsque le siège est dans son état déployé. L'organe qui permet ce déport est le bras oscillant qui est dans le prolongement du dossier. Grâce à cette disposition, dans son état déployé, le siège offre un plan d'appui utile pour un passager qui est égal à la somme de la longueur du dossier et de la longueur du bras osillant. On voit donc que le plan d'appui utile pour la passager est supérieur à la stricte longueur du dossier qui, rappelons le, est fixé par la cote longitudinale de l'espace de rangement. En d'autres termes, l'invention permet de fournir un siège qui dans son état déployé, offre un plan d'appui utile pour un passager dont la longueur excède la cote longitudinale de l'espace de rangement dans lequel le siège devra se ranger. Il s'agit là d'un avantage fondamental par rapport aux sièges de l'art antérieur dont la cote longitudinale de l'espace de rangement fixe la longueur du dossier ; cette cote longitudinale étant contingentée par des considérations d'encombrement général du véhicule, la longueur du dossier s'en trouve d'autant limitée.

Dans l'état replié du siège, les bras oscillants se rangent le long du dossier ; dans cet état du siège, la présence des bras oscillants est donc transparente en ce qui concerne l'encombrement longitudinal du siège.

Les bénéfices en termes de confort et de sécurité sont donc très clairs pour le passager de stature moyenne puisque celui-ci bénéficie d'un siège sur lequel il peut entièrement appuyer son dos.

Selon une disposition particulièrement avantageuse de l'invention, le siège dans son état replié est logé dans une cuvette ménagée dans le plancher du véhicule, la longueur du dossier étant inférieure ou égale à la dimension longitudinale de la cuvette.

Outre le fait de procurer un confort et un niveau de sécurité supérieur à ceux des sièges de l'art antérieur, le siège selon l'invention peut se replier dans une cuvette ceinturée par quatre parois et non une cuvette ceinturée par trois parois et ouverte sur l'une de ses faces, comme cela est le cas de nombreux sièges de l'art antérieur.

On note également que, grâce aux mouvements de rotation antagonistes du bras oscillant et du dossier, le siège peut se déplier au-dessus de la cuvette et non en avant de celle-ci, comme cela est également le cas de nombreux sièges de l'art antérieur.

Le siège, ainsi défini peut être assimilé à un polygone à quatre cotés défini par l'assise, le pietement support d'assise, le dossier et les bras oscillants présentant cinq pivots ; il en résulte que le mouvement du siège peut être non orienté ou non défini. En d'autres termes, lorsqu'un utilisateur souhaitera agir sur le siège soit pour le replier à partir de sa position déployée, soit pour le déployer à partir de sa position escamotée, le siège pourrait se comporter de manière aléatoire.

Pour éviter ce problème, l'invention prévoit que le siège présente des moyens de guidage du dossier lors du passage du siège de sa position déployée à sa position repliée.

Ces moyens de guidage ont pour fonction d'obliger le dossier à suivre une trajectoire donnée.

Selon une forme de réalisation avantageuse, le dossier est équipé d'au moins un galet qui circule, lors du mouvement du siège, dans un rail relié au plancher.

Pour que le liaison entre le rail et le dossier ne conduise pas à allonger ce dernier, ce qui serait contraire au but premier de l'invention, chaque rail est relié par une liaison pivot au plancher et forme un angle aigu avec le plancher quand le siège est dans son état déployé et un angle nul avec le plancher quand le siège est dans son état replié. Ainsi, le rail ne crée aucune perturbation lorsque le siège est en position repliée, puisqu'il est intégré dans le plancher. De plus grâce à la liaison pivot qui le relie au plancher, il peut pivoter pour se soulever au dessus du niveau du plancher.

Selon une forme de réalisation avantageuse, l'extrémité de chaque rail est équipée d'une platine présentant une lumière dans laquelle s'engage un doigt dépassant de chaque bras oscillant.

De façon avantageuse, le piètement avant possède deux pieds parallèles entre lesquels s'engage un appui tête supporté par le dossier.

De préférence, le siège comprend deux rails dans chacun desquels circule un galet.

Pour maintenir le siège en position déployée, il comprend des premiers moyens de verrouillage de la partie supérieure du dossier par rapport à la partie inférieure du dossier et des seconds moyens de verrouillage de la partie inférieure du dossier par rapport au plancher.

De façon avantageuse, il comprend des moyens de séquençage des premiers moyens de verrouillages et des seconds moyens de verrouillage permettant, en position déployée du siège, de libérer dans un premier temps les premiers moyens de verrouillage et dans un deuxième temps les seconds moyens de verrouillage. Il est, en effet, important de prévoir des moyens de séquençage qui ordonne le déverrouillage des deux parties du dossier dans un ordre défini ; il faut, dans un premier temps, déverrouiller la partie supérieure du dossier en vue du son rabattement en direction de l'assise et, dans un second temps, déverrouiller la partie inférieure du dossier en vue de son basculement en direction du plancher.

Dans une forme de réalisation du siège, le dossier est équipé d'au moins un crochet pivotant entre une position de verrouillage du dossier dans laquelle le crochet est engagé sur un doigt dépassant d'un bras et une position de déverrouillage du dossier dans laquelle le crochet est dégagé du doigt, autorisant le rotation du dossier par rapport au bras.

Pour le verrouillage d'un des bras par rapport à l'une des équerres, chaque bras présente sur sa face extérieure un doigt s'engageant dans une lumière en L, presentant une partie oblongue et une encoche, pratiquée dans une jambe de force pivotant par rapport à l'équerre entre une position de verrouillage de chaque bras par rapport à l'équerre dans laquelle le doigt est bloqué l'encoche de la lumière en L et une position de déverrouillage de chaque bras par rapport à l'équerre dans laquelle le doigt peut circuler dans dans la partie oblongue de la lumière.

Selon une possiblilité, la jambe de force est maintenue dans sa position de verrouillage du bras par rapport à l'équerre par un ressort de traction et présente une rampe contre laquelle s'appuie une came reliée au dossier lors de la rotation du dossier pour faire échapper le doigt de l'encoche de la lumière et déverrouiller le bras par rapport à chaque équerre.

Pour sa bonne compréhension, l'invention est décrite en référence au dessin ci annexé représentant à titre d'exemple non limitatif une forme de réalisation d'un siège selon celle-ci.
Figure 1 montre, en perspective, le siège dans son état déployé,
Figure 2 montre le siège en perspective, ses éléments de garniture ôtés faisant apparaître la structure du siège,

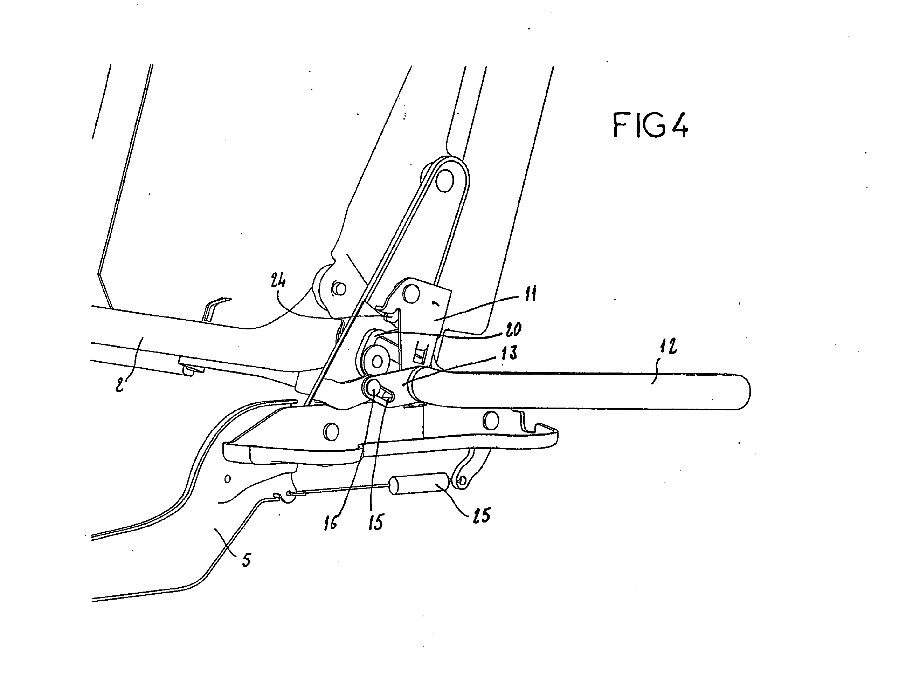

Figures 3 à 8 montrent le siège passant de son état déployé à son état replié,
Figures 9 à 12 montrent, en vue de côté, les moyens de verrouillage du siège,
Figures 13 et 14 représentent schématiquement un siège selon l'invention en position déployée et repliée.

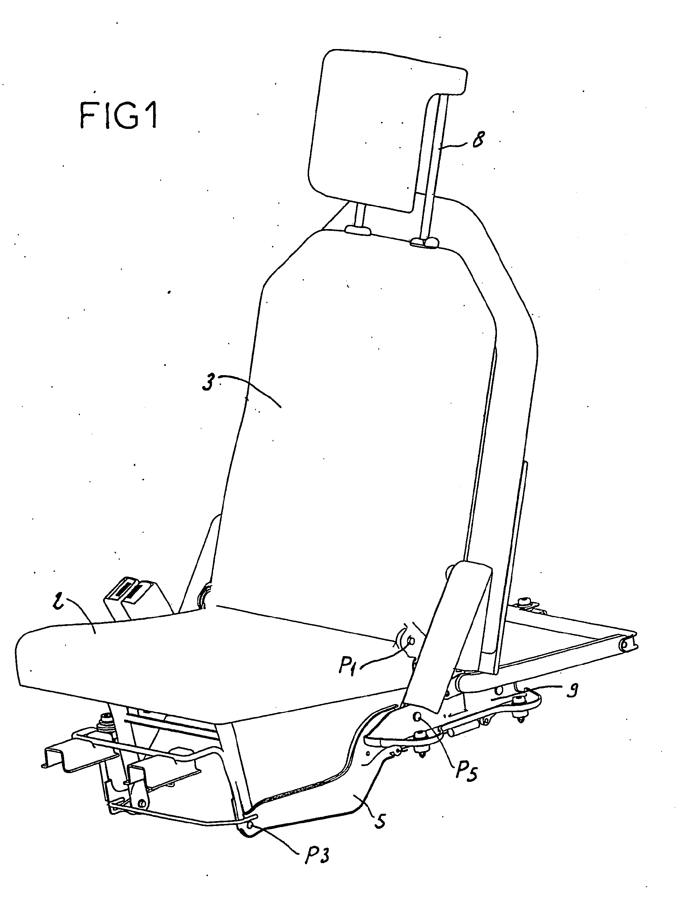

Le siège dans sa forme de réalisation représenté sur le dessin possède une assise 2 et un dossier 3, qui sont chacun revêtu de garniture, comme le montre la figure 1. L'assise 2 est articulée sur le dossier 3 par deux liaisons pivot P1. Un piétement avant constitué de deux pieds parallèles 4 relie l'avant de l'assise 3 à l'extrémité avant de deux ferrures 5.

Le dossier 3, qui est relié de manière pivotante à l'assise par la liaison P1, est de plus relié à deux bras oscillants 7. Ces deux bras 7 sont disposés de part et d'autre du dossier 3 ; chaque bras 7 oscillant est relié au dossier 3, par une liaison pivot P4, et à une équerre 9, par une liaison pivot P3. Chacune des équerres 9 est soudée dans le prolongement d'une ferrure 5.

De façon classique, le dossier 3 est équipé d'un appui tête 8 rétractable. On note également que la face postérieure du dossier 3 reçoit une plaque 10 qui déborde du contour du dossier 3.

On voit donc que, dans le siège selon l'invention, le dossier 3 est lié en rotation à l'assise 2 et à deux bras 7 oscillants pivotant eux-mêmes par rapport à leur support, en l'occurrence les deux sous ensembles ferrure 5 et équerre 9. La fixation du siège sur le plancher d'un véhicule se fait par des boulons traversant chaque équerre 9.

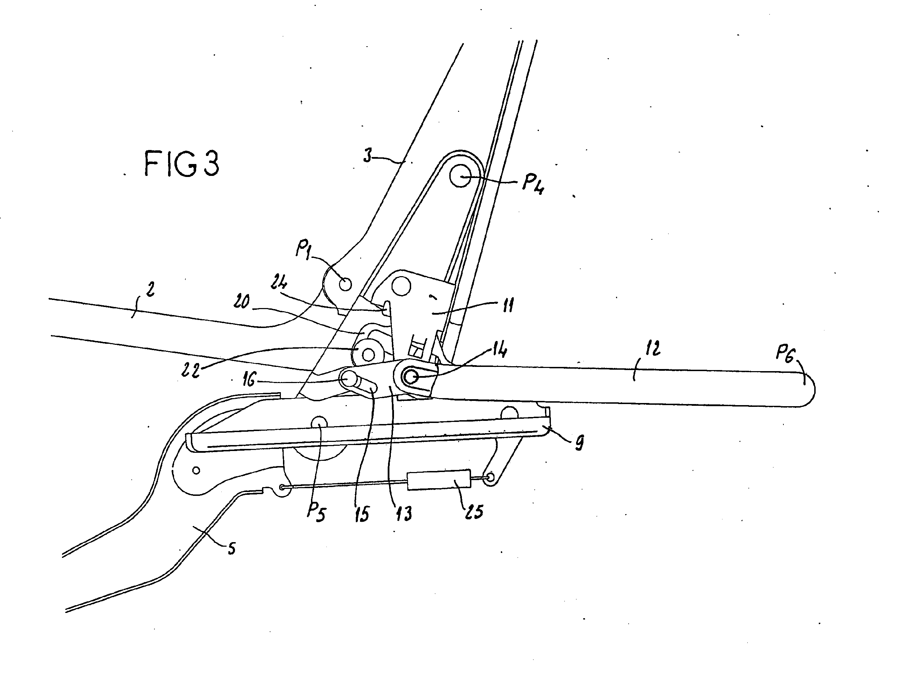

Un autre point important du siège réside dans la présence sur sa partie postérieure de deux rails 12. L'extrémité arrière de chacun de ces rails 12 est fixée, par une liaison pivot P6, au plancher du véhicule autorisant ainsi leur rotation par rapport à celle-ci ; au niveau de leur extrémité avant, chacun des rails 12 est relié au dossier 3 par une liaison glissante G1. Cette liaison glissante G1 est réalisée par un galet 14 relié au dossier 3 par l'intermédiaire d'un flasque 11 de support. Le galet 14 apparaît à la figure 3 sur laquelle l'extrémité d'un des rails 12 est représentée avec arrachement partiel.

Chaque flasque 11, qui est supporté par le dossier 3, reçoit une came 24 dont la fonction, lors du verrouillage, apparaîtra plus loin.

On peut noter que, si chaque liaison glissante G1 est réalisée par deux galets 14 circulant dans des rails 12, on peut également envisager de réaliser cette liaison par un simple doigt engagé dans chacun des rails 12.

Un autre élément participe à la liaison de chaque rail 12 sur leur bras oscillant 7 respectif. Il s'agit de platines 13 fixées à l'extrémité avant de chaque rail 12. Chacune des platines 13 présente une lumière oblongue 15 dans laquelle est engagé un doigt 16. Ce doigt 16 dépasse de chaque bras 7 et s'engage dans la lumière 15.

Le siège est également équipé de moyens de verrouillage permettant de le maintenir en position déployée.

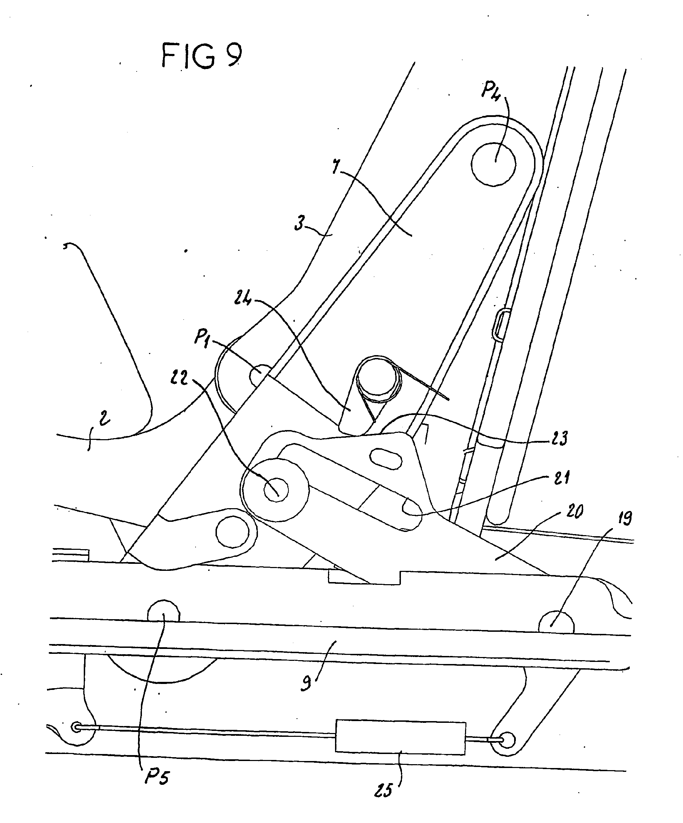

Pour la description des moyens de verrouillage, on se référera plus particulièrement aux figures 9 à 12.

Ces moyens de verrouillage sont présents de part et d'autre des bras oscillants 7.

En se reportant à la figure 9 sur laquelle le rail 12 et sa platine 13 ne sont pas représentés, on peut voir que le siège est équipé d'une jambe de force 20, articulée par un axe 19 sur l'équerre 9. La jambe de force 20 présente une lumière 21 oblongue ayant une encoche, la lumière 21 présentant une forme de L. Un doigt 22 dépassant du bras 7 est engagé dans l'encoche de la lumière 21.

La jambe de force 20 présente, de plus une rampe 23, sur laquelle peut venir en appui la came 24 qui est suspendu au flasque 11.

En position déployée du siège, le doigt 16 est bloqué dans l'encoche de lumière 21, ce qui assure le verrouillage du bras oscillant 7 par rapport à l'équerre 9. Le maintien de la jambe de force 20 dans cette position est assuré par un ressort de traction 25 dont l'une des extrémités est accrochée à la jambe de force 20 à son extrémité opposée, par rapport à l'axe 19, à celle dans laquelle est ménagée la lumière 21.

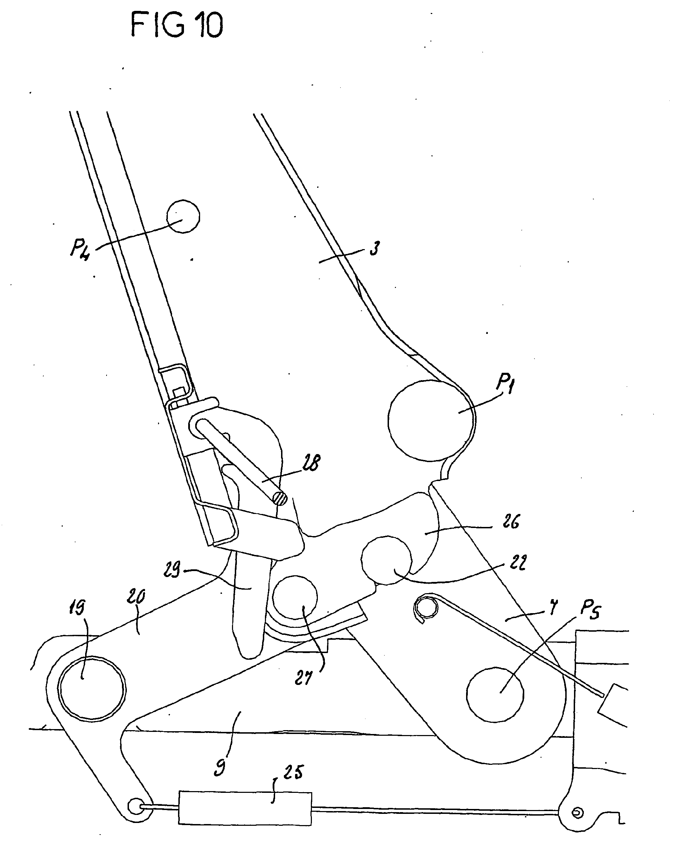

En se reportant à la figure 10 qui est une vue intérieure du siège, il apparaît que le dossier est équipé d'un crochet 26 lié en pivot par rapport au dossier 3 par un axe 27. En position déployée du siège, le crochet 26 est engagé dans le doigt 22 qui dépasse du bras 7.

Pour actionner les crochets 26 en vue de les dégager du doigt 22, ceux-ci sont reliés à une tige 28 elle-même reliée à deux crosses 29 pivotantes.

On peut également remarquer que dans un état déployé, les pieds 4 du siège sont en appui contre une butée avant 18 lié au plancher du véhicule par une tige transversale qui s'encliquette dans deux rainures de la butée.

La cinématique de fonctionnement du siège apparaît être la suivante :

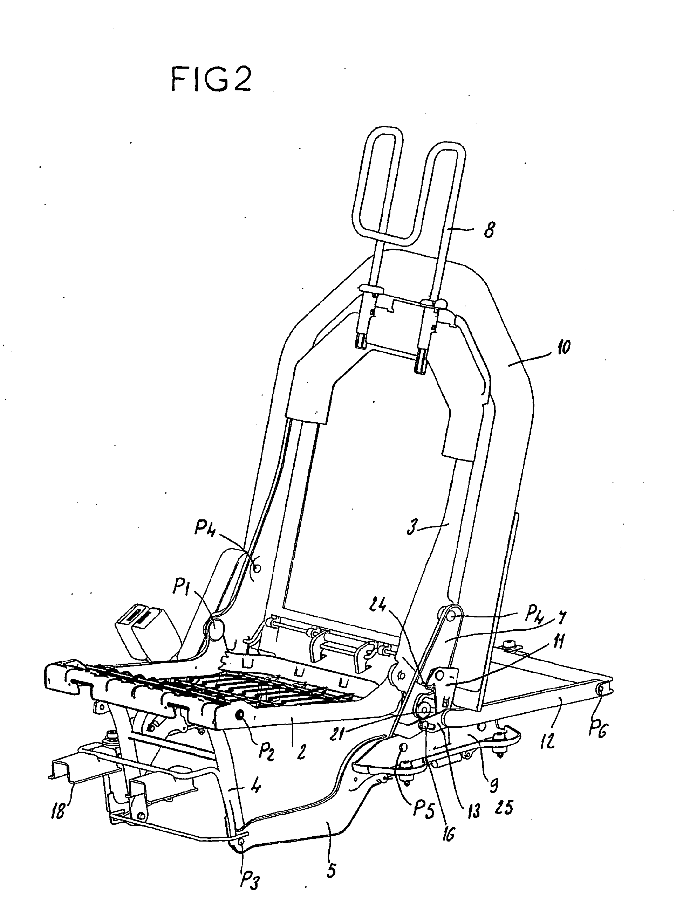

On se réfère tout d'abord à la figure 2, qui représente le siège dans son état déployé, c'est-à-dire une position dans laquelle l'assise 2 est sensiblement parallèle au plancher et dans laquelle le dossier 3 est redressé par rapport au plancher ; dans cet état du siège, les rails 12 forment un angle aigu par rapport au plancher. En d'autres termes, l'extrémité des rails 12 qui reçoit le galet 14 se trouve soulevée par rapport au plancher.

Dans cette position, les bras oscillants 7 sont verrouillés par rapport aux équerres 9 par les jambes de force 20 et le dossier 3 est lui-même verrouillé par rapport aux bras oscillants 7 par les crochets 26.

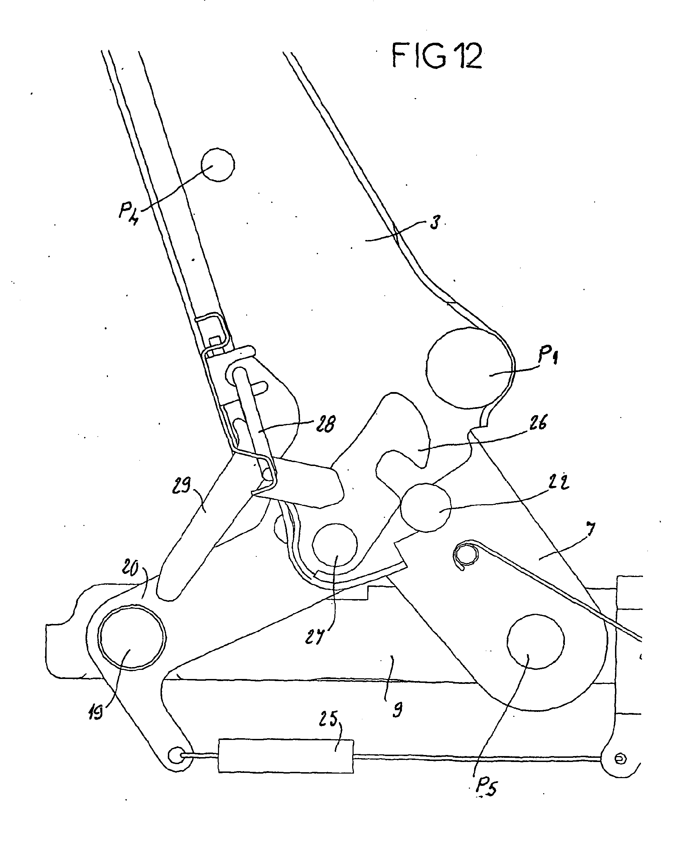

Pour une action sur les crochets 26, ces derniers se dégagent de chaque doigt 22 sur lequel ils sont engagés libérant le dossier 3 des bras 7, comme on peut le voir sur la figure 12 ; ceci autorise la rotation par rapport à la liaison pivot P4 du dossier 3.

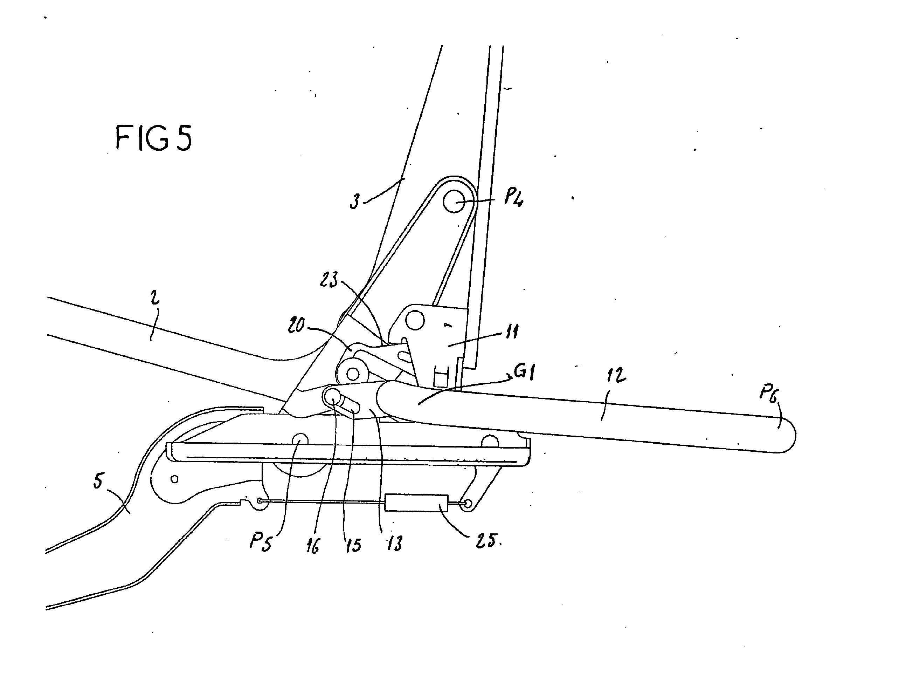

Le dossier 3 peut alors commencer son mouvement vers l'avant. La figure 5 illustre cet état du siège. On note sur cette figure que le flasque 11 qui est lié au dossier 3 s'est déplacé par rapport au bras 7 jusqu'à ce que la came 24 vienne en appui sur la rampe 23. La figure 9 sur laquelle le flasque 11 n'est pas représenté montre clairement la position de la came 24.

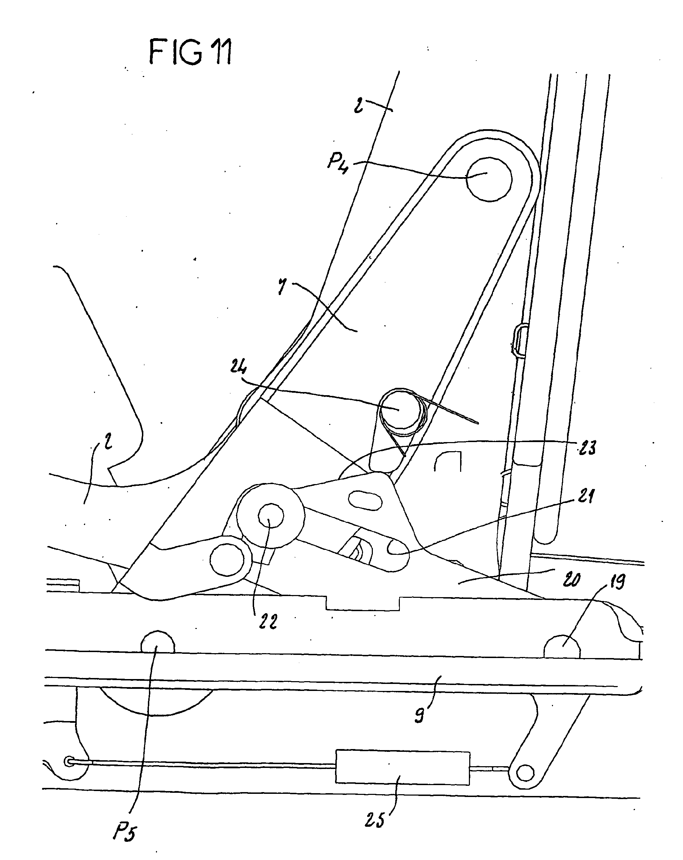

En poursuivant la rotation du dossier 3, la came 24 glisse sur la rampe 23 et fait ainsi pivoter la jambe de force 20 jusqu'à ce que le doigt 22 se trouve en regard de la partie oblongue de la lumière 21 en L autorisant le déblocage du bras 7 par rapport à l'équerre 9. Le déverrouillage du bras 7 est illustré figure 11.

On conçoit bien que le déverrouillage du siège s'est fait en deux temps. En premier lieu, le dossier 3 est déverrouillé des bras 7 oscillants et, en second lieu, les bras 7 oscillants sont déverrouillés des équerres 9.

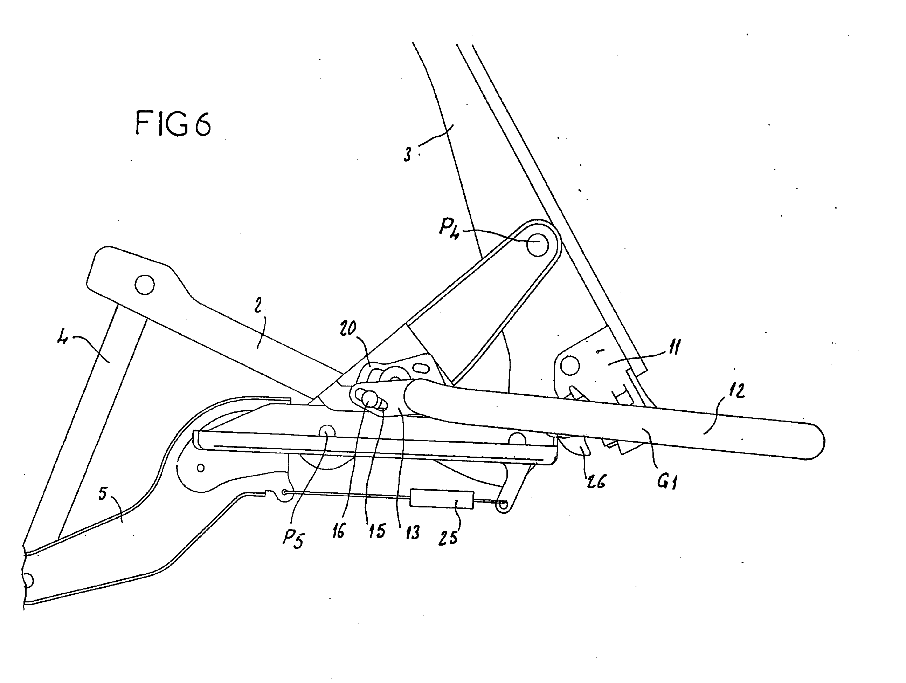

La figure 6 illustre la poursuite du repliement du siège au cours duquel le dossier 3 est rabattu en direction de l'assise 2 par un pivotement de celle-ci par rapport à la liaison pivot P4 ; le dossier 3 et chaque bras oscillant 7 pivotent en sens contraire.

Comme l'assise 2 est reliée par la liaison pivot P1 au dossier 3, celle-ci s'abaisse vers le plancher.

Un point essentiel à souligner dans le mouvement de rabattement du dossier est que celui-ci est guidé par le rail 12 ; un simple rabattement du dossier 3 sur l'assise 2 est exclu. Grâce à l'action des rails 12, le rabattement du dossier 3 se traduit obligatoirement par un mouvement vers le bas et vers l'arrière du dossier entraînant les bras oscillants 7 et l'assise 2.

La fonction des platines 13 est importante dans la cinématique de repliement. Comme on peut le voir sur la figure 6, chaque doigt 16 se trouve engager dans la lumière 15 et pilote le mouvement des rails 12 ; ainsi les rails 12 fournissent un appui aux galets 14.

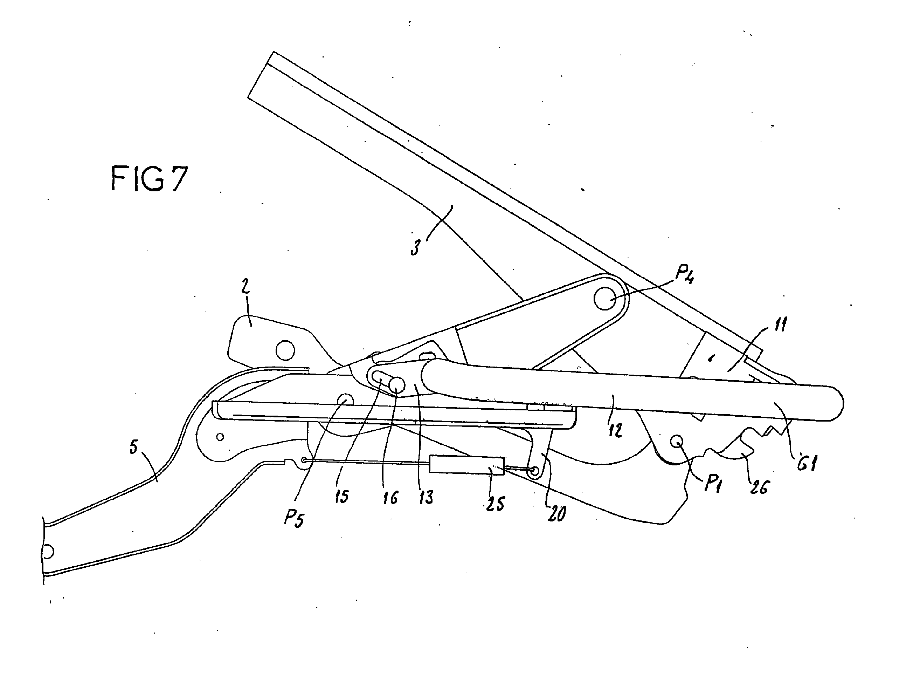

La figure 7 montre le siège poursuivant son repliement. On peut voir sur cette figure que chaque doigt 16 se trouve en fin de course dans la lumière 15. A ce stade, le repliement se poursuit sous l'effet de la gravité ; les bras oscillants 7 et les pieds 4 pivotent vers l'arrière par rapport respectivement aux liaisons P5 et P3, tandis que le dossier 3 pivote vers l'avant par rapport à la liaison P4.

En poursuivant la rotation (figure 7), le dossier 3 se rabat totalement sur l'assise qui, elle-même, se trouve dans une position abaissée dans laquelle elle est en appui sur le fond du plancher.

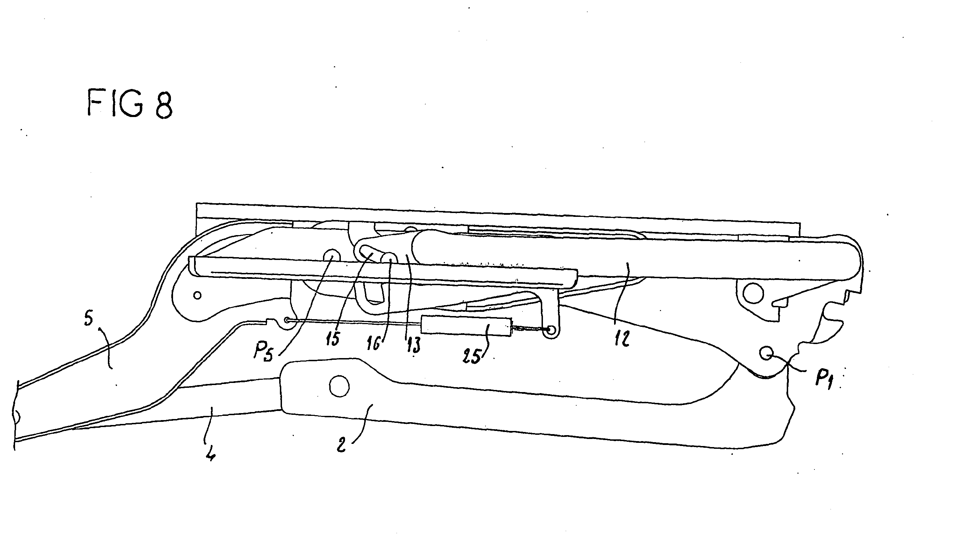

La figure 8, qui montre le siège en position repliée, est tout à fait intéressante puisque, comme on peut le voir sur cette figure, le siège dans sa position repliée est extrêmement compact.

Les rails 12 sont également d'une grande utilité lorsqu'un utilisateur souhaite déployer un siège, puisqu'ils interdisent la levée du dossier par son extrémité arrière.

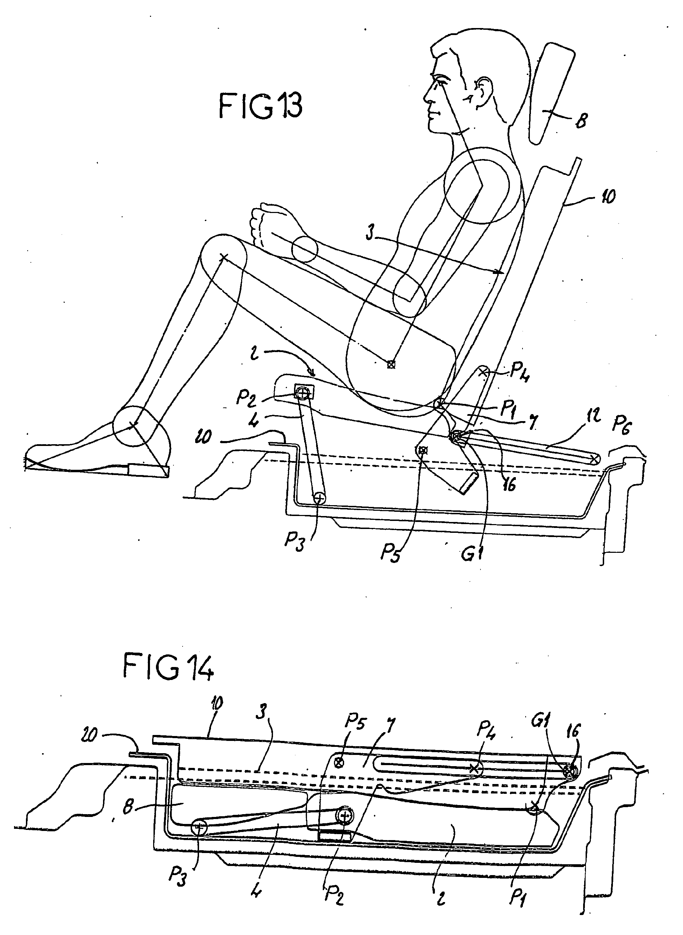

Les figures 13 et 14 résument bien les avantages du siège selon l'invention.

La figure 13 montre le siège embarqué dans une cuvette 20 ménagée dans un plancher 21 du véhicule. On voit distinctement le déport du dossier 3 vers le haut pour fournir au passager un plan d'appui qui lui permet de reposer la totalité de son dos. On note également que le siège est déployé directement au dessus de la cuvette 21.

Quant à la figure 14, elle illustre l'extrême compacité longitudinale et verticale du siège lorsqu'il est replié.

Une disposition supplémentaire favorisant encore la compacité du siège dans son état replié tient au fait que l'appui tête 8 se range entre les pieds 4.

Ces figures mettent en évidence la caractéristique remarquable de l'invention, à savoir le fait que le dossier 3 est égal à la cote longitudinale de la cuvette 21 (cf figure 14), mais le dossier 3 est déporté vers le haut, lorsque le siège est en position déployée (cf figure 13). On remarque que la plaque 10 referme totalement la cuvette 21 de sorte que une fois escamoté le siège ne laisse subsister aucune aspérité.

L'invention fournit donc un siège qui permet de maximiser la hauteur de son dossier, tout en étant escamotable dans une configuration présentant un volume extrêmement réduit.

Ce siège, qui trouve notamment son application dans le rang 3 des véhicules de type monospace ou break, apporte un surcroît substantiel de confort et de sécurité pour les passagers qui y prennent place.

## Revendications

1. Siège pour véhicule automobile comprenant :
- un dossier (3),
- une assise (2) reliée au dossier (3) par une liaison pivot (P1) et reliée au plancher du véhicule par un piétement avant (P2), **caractérisé en ce qu'**il comprend :
- deux rails (12),
- deux bras oscillants (7) reliés chacun, par deux liaisons pivot (P4, P5) au dossier et au plancher du véhicule, le siège étant mobile entre :
- un état déployé dans lequel l'assise (2) est sensiblement parallèle au plancher et le dossier (3) est sensiblement vertical, chaque bras oscillant (7) étant alors dans le prolongement du dossier (3), assurant un déport du dossier vers le haut, et,
- un état replié dans lequel le dossier (3) est rabattu en avant sensiblement horizontalement sur l'assise (2),
lors du passage de l'état déployé à l'état replié, le rabattement du dossier (3) est guidé par les rails (12) et se traduit par un mouvement vers le bas et vers l'arrière du dossier (3) entrainant l'assise (2) et les bras oscillant (7) qui pivotent dans un sens contraire au sens de pivotement du dossier (2) pour se ranger le long du dossier (3).

2. Siège selon la revendication 1, **caractérisé en ce que** le siège dans son état replié est logé dans une cuvette (21) ménagée dans le plancher du véhicule, la longueur du dossier (3) étant inférieure ou égale à la dimension longitudinale de la cuvette (21).

3. Siège selon la revendication 1 ou la revendication 2, **caractérisé en ce qu'**il présente des moyens de guidage du dossier (3) lors du passage du siège de son état déployé à son état replié.

4. Siège selon la revendication 3, **caractérisé en ce que** le dossier (3) est équipé d'au moins un galet (14) qui circule dans, au moins, un rail (12) pouvant être relié au plancher, lors du mouvement du siège.

5. Siège selon la revendication 4, **caractérisé en ce que** chaque rail (12) est relié par une liaison pivot (P6) au plancher, et forme un angle aigu avec le plancher quand le siège est en position déployée et forme un angle nul avec le plancher quand le siège est en position repliée.

6. Siège selon la revendication 4 ou la revendication 5, **caractérisé en ce que** l'extrémité de chaque rail (12) est équipée d'une platine (11) présentant une lumière (15), dans laquelle s'engage un doigt (16) dépassant de chaque bras oscillant (7).

7. Siège selon l'une des revendications 1 à 6, **caractérisé en ce que** le piètement avant possède deux pieds (4) parallèles entre lesquels s'engage un appui tête supporté par le dossier, en position repliée du siège.

8. Siège selon l'une des revendications 3 à 7, **caractérisé en ce qu'**il comprend deux rails (12) dans chacun desquels circule un galet.

9. Siège selon l'une des revendications 1 à 8, **caractérisé en ce qu'**il comprend des premiers moyens de verrouillage de la partie supérieure du dossier par rapport à la partie inférieure du dossier et des seconds moyens de verrouillage de la partie inférieure du dossier par rapport au plancher.

10. Siège selon la revendication 9, **caractérisé en ce qu'**il comprend des moyens de séquençage des premiers moyens de verrouillages et des seconds moyens de verrouillage permettant, en position déployée du siège, de libérer dans un premier temps les premiers moyens de verrouillage et dans un deuxième temps les seconds moyens de verrouillage.

11. Siège selon l'une des revendications 9 ou la revendication 10, **caractérisé en ce que** le dossier (3) est équipé d'un crochet (26) pivotant entre une position de verrouillage du dossier (3) dans laquelle le crochet (26) est engagé sur un doigt (22) dépassant du bras (7) et une position de déverrouillage du dossier (3) dans laquelle le crochet (26) est dégagé du doigt (22).

12. Siège selon la revendication 11, **caractérisé en ce que** chaque bras (7) présente sur sa face extérieure un doigt (22) s'engageant dans une lumière (21) en L présentant une partie oblongue et une encoche pratiquée dans une jambe de force (20), pivotant par rapport à l'équerre (9) entre une position de verrouillage de chaque bras (7) par rapport à l'équerre (9) dans laquelle le doigt (22) est bloqué dans l'encoche de la lumière (21) et une position de déverrouillage de chaque brete' tas (7) par rapport à l'équerre (9) dans laquelle le doigt peut circuler dans la partie oblongue lumière (21).

13. Siège selon la revendication 12, **caractérisé en ce que** la jambe de force (20) est maintenue dans sa position de verrouillage du bras (7) par rapport à l'équerre (9) par un ressort de traction (25) et présente une rampe (23) contre laquelle s'appuie une came (24) reliée au dossier (3) lors de la rotation du dossier (3) pour faire échapper le doigt (22) de l'encoche de la lumière (21) et déverrouiller le bras (7) par rapport à chaque équerre (9).

## Claims

1. A seat for a motor vehicle including:
- a backrest (3),
- a seat pan (2) connected to the backrest (3) by a pivot connection (P1) and connected to the floor of the vehicle by a front underframe (P2), **characterized in that** it includes:
- two rails (12),
- two oscillating arms (7) each connected by two pivot connections (P4, P5) to the backrest and to the floor of the vehicle, the seat being movable between:
- an unfolded state in which the seat pan (2) is substantially parallel to the floor and the backrest (3) is substantially vertical, each oscillating arm (7) therefore being in the extent of the backrest (3), ensuring a deflection of the backrest upwards, and
- a folded state in which the backrest (3) is folded down forward substantially horizontally on the seat pan (2),
on the passage from the unfolded state to the folded state, the folding down of the backrest (3) is guided by the rails (12) and is represented by a movement downwards and towards the rear of the backrest (3) entraining the seat pan (2) and the oscillating arms (7) which pivot in an opposite direction to the pivoting direction of the backrest (2) to be disposed along the backrest (3).

2. The seat according to Claim 1, **characterized in that** the seat, in its folded state, is housed in a well (21) arranged in the floor of the vehicle, the length of the backrest (3) being less than or equal to the longitudinal dimension of the well (21).

3. The seat according to Claim 1 or Claim 2, **characterized in that** it has guiding means of the backrest (3) during the passage of the seat from its unfolded state to its folded state.

4. The seat according to Claim 3, **characterized in that** the backrest (3) is equipped with at least one roller (14) which travels in at least one rail (12) being able to be connected to the floor, during the movement of the seat.

5. The seat according to Claim 4, **characterized in that** each rail (12) is connected by a pivot connection (P6) to the floor, and forms an acute angle with the floor when the seat is in unfolded position and forms a zero angle with the floor when the seat is in folded position.

6. The seat according to Claim 4 or Claim 5, **characterized in that** the end of each rail (12) is equipped with a plate (11) having a slot (15), in which a pin (16) engages, projecting from each oscillating arm (7).

7. The seat according to one of Claims 1 to 6, **characterized in that** the front underframe has two parallel feet (4) between which a headrest engages supported by the backrest, in the folded position of the seat.

8. The seat according to one of Claims 3 to 7, **characterized in that** it includes two rails (12) in each of which a roller travels.

9. The seat according to one of Claims 1 to 8, **characterized in that** it includes first locking means of the upper part of the backrest with respect to the lower part of the backrest and second locking means of the lower part of the backrest with respect to the floor.

10. The seat according to Claim 9, **characterized in that** it includes sequencing means of the first locking means and of the second locking means, permitting, in the unfolded position of the seat, firstly the first locking means to be released and secondly the second locking means to be released.

11. The seat according to one of Claims 9 or Claim 10, **characterized in that** the backrest (3) is equipped with a hook (26) pivoting between a locking position of the backrest (3) in which the hook (26) is engaged on a pin (22) projecting from the arm (7) and an unlocking position of the backrest (3) in which the hook (26) is disengaged from the pin (22).

12. The seat according to Claim 11, **characterized in that** each arm (7) has on its exterior face a pin (22) engaging into an L-shaped slot (21) having an oblong part and a notch formed in a strut (20), pivoting with respect to the bracket (9) between a locking position of each arm (7) with respect to the bracket (9) in which the pin (22) is locked in the notch of the slot (21) and an unlocking position of each arm (7) with respect to the bracket (9), in which the pin can travel in the oblong part of the slot (21).

13. The seat according to Claim 12, **characterized in that** the strut (20) is held in its locking position of the arm (7) with respect to the bracket (9) by a tension spring (25) and has a ramp (23) against which a cam (24) rests, which is connected to the backrest (3) on the rotation of the backrest (3) to release the pin (22) from the notch of the slot (21) and to unlock the arm (7) with respect to each bracket (9).

## Patentansprüche

1. Sitz für Kraftfahrzeug, der aufweist:
- eine Rückenlehne (3),
- einen Sitzfläche (2), die mit der Rückenlehne (3) durch eine Schwenkverbindung (P1) verbunden ist und mit dem Fußboden des Fahrzeugs durch einen vorderen Sockel (P2) verbunden ist, **dadurch gekennzeichnet, dass** er aufweist:
- zwei Schienen (12),
- zwei Schwenkarme (7), die jeweils durch zwei Schwenkverbindungen (P4, P5) mit der Rückenlehne und dem Fußboden des Fahrzeugs verbunden sind, wobei der Sitz beweglich ist zwischen:
- einem aufgeklappten Zustand, in dem die Sitzfläche (2) im Wesentlichen zu dem Fußboden parallel ist und die Rückenlehne (3) im Wesentlichen vertikal ist, wobei jeder Schwenkarm (7) daher in der Verlängerung der Rückenlehne (3) ist, indem er einen Versatz der Rückenlehne nach oben sicherstellt, und
- einem umgeklappten Zustand, in dem die Rückenlehne (3) im Wesentlichen horizontal auf die Sitzfläche (2) nach vorn umgeklappt ist,
während der Passage von dem aufgeklappten Zustand zu dem umgeklappten Zustand, das Umklappen der Rückenlehne (3) von den Schienen (12) geführt wird und eine Bewegung nach unten und nach hinten der Rückenlehne (3) ergibt, die die Sitzfläche (2) und die Schwenkarme (7) mitnimmt, die in eine Richtung gegen die Schwenkrichtung der Rückenlehne (2) schwenken, um sich entlang der Rückenlehne (3) anzuordnen.

2. Sitz nach Anspruch 1, **dadurch gekennzeichnet, dass** der Sitz in seinem umgeklappten Zustand in einer Schale (21) aufgenommen ist, die in dem Fußboden des Fahrzeugs eingerichtet ist, wobei die Länge der Rückenlehne (3) kleiner oder gleich dem Längsmaß der Schale (21) ist.

3. Sitz nach Anspruch 1 oder Anspruch 2, **dadurch gekennzeichnet, dass** er Mittel zum Führen der Rückenlehne (3) bei dem Übergang des Sitzes von seinem aufgeklappten Zustand zu seinem umgeklappten Zustand aufweist.

4. Sitz nach Anspruch 3, **dadurch gekennzeichnet, dass** die Rückenlehne (3) mit wenigstens einer Walze (14) versehen ist, die in wenigstens einer Schiene (12) läuft, die mit dem Fußboden bei der Bewegung des Sitzes verbunden werden kann.

5. Sitz nach Anspruch 4, **dadurch gekennzeichnet, dass** jede Schiene (12) durch eine Schwenkverbindung (P6) mit dem Fußboden verbunden ist und einen spitzen Winkel mit dem Fußboden bildet, wenn der Sitz in aufgeklappter Position ist, und einen Winkel gleich null mit dem Fußboden bildet, wenn der Sitz in umgeklappter Position ist.

6. Sitz nach Anspruch 4 oder Anspruch 5, **dadurch gekennzeichnet, dass** das Ende jeder Schiene (12) mit einer Platte (11) ausgerüstet ist, die ein Langloch (15) aufweist, in das ein Finger (16), der von jedem Schwenkarm (7) vorsteht, eingreift.

7. Sitz nach einem der Ansprüche 1 bis 6, **dadurch gekennzeichnet, dass** der vordere Sockel zwei parallele Füße (4) aufweist, zwischen welchen sich eine Kopfstütze, die von der Rückenlehne getragen wird, in umgeklappter Position des Sitzes eingreift.

8. Sitz nach einem der Ansprüche 3 bis 7, **dadurch gekennzeichnet, dass** er zwei Schienen (12) aufweist, in welchen jeweils eine Walze läuft.

9. Sitz nach einem der Ansprüche 1 bis 8, **dadurch gekennzeichnet, dass** er erste Verriegelungsmittel des oberen Teils der Rückenlehne in Bezug zu dem unteren Teil der Rückenlehne und zweite Verriegelungsmittel des unteren Teils der Rückenlehne in Bezug zu dem Fußboden aufweist.

10. Sitz nach Anspruch 9, **dadurch gekennzeichnet, dass** er Mittel zum Sequenzieren der ersten Verriegelungsmittel und der zweiten Verriegelungsmittel aufweist, die es bei aufgeklappter Position des Sitzes erlauben, zuerst die ersten Verriegelungsmittel und dann die zweiten Verriegelungsmittel freizugeben.

11. Sitz nach einem der Ansprüche 9 oder dem Anspruch 10, **dadurch gekennzeichnet, dass** die Rückenlehne (3) mit einem Haken (26) ausgerüstet ist, der zwischen einer Verriegelungsposition der Rückenlehne (3), in der der Haken (26) auf einem Finger (22), der aus dem Arm (7) vorsteht, eingreift, und einer Entriegelungsposition der Rückenlehne (3), in der der Haken (26) aus dem Finger (22) freigegeben ist, schwenkt.

12. Sitz nach Anspruch 11, **dadurch gekennzeichnet, dass** jeder Arm (7) auf seiner Außenseite einen Finger (22) aufweist, der sich in ein Langloch (21) in L-Form fügt, das einen länglichen Teil und eine Kerbe aufweist, die in einem Federbein (20) angelegt ist, das um den Winkel (9) zwischen einer Verriegelungsposition jedes Arms (7) in Bezug zu dem Winkel (9), in welcher der Finger (22) in der Kerbe des Langlochs (21) blockiert ist, und einer Entriegelungsposition jedes Arms (7) in Bezug zu dem Winkel (9), in der der Finger in dem länglichen Teil des Langlochs (21) laufen kann, schwenkt.

13. Sitz nach Anspruch 12, **dadurch gekennzeichnet, dass** das Federbein (20) in seiner Verriegelungsposition des Arms (7) in Bezug zu dem Winkel (9) durch eine Zugfeder (25) gehalten wird und eine Rampe (23) aufweist, gegen welche sich eine Nocke (24), die mit der Rückenlehne (3) bei der Drehung der Rückenlehne (3) verbunden ist, legt, um den Finger (22) aus der Kerbe des Langlochs (21) austreten zu lassen und den Arm (7) in Bezug zu dem Winkel (9) zu entriegeln.
